# EUROPEAN PATENT APPLICATION

(11) **EP 1 686 060 A1**
(43) Date of publication of application: **02.08.2006**
(21) Application number: 06100774.6
(22) Date of filing: 24.01.2006
(51) Int. Cl.: B65B 19/22, B65B 51/10

(54) **Method of producing a sealed wrapping about a group of cigarettes**

(30) Priority: 27.01.2005 IT BO20050042
(71) Applicant: G.D SOCIETÀ PER AZIONI, 40133 Bologna (IT)
(72) Inventor: SPISNI, Franco, 40063, MONGHIDORO (IT); GHINI, Marco, 40050, MONTE SAN PIETRO (IT); ROSSI, Alessandro, 40139, BOLOGNA (IT); DE PIETRA, Gaetano, 40033, CASALECCHIO DI RENO (IT)
(74) Representative: Jorio, Paolo

(57) **Abstract**

A method of producing a sealed wrapping (2) about a group (3) of cigarettes (4), whereby a sheet (1) of wrapping material is folded into a U about the group (3), is closed into a tube by gripping and sealing a first pair of flaps (9), and is sealed by closing the ends of the tube by gripping and sealing relative second pairs of flaps (18); the sealing of each second pair forms a relative wall (7; 6) of the sealed wrapping (2), a relative tab (25; 15) crosswise to the wall (7; 6), and a relative pair of triangular tabs (24), which, after the tab (25; 15) is folded onto the respective wall (7; 6), are folded onto an adjacent relative axial end wall (7) of the sealed wrapping (2).

## Description

The present invention relates to a method of producing a sealed wrapping about a group of cigarettes.

A known packet of cigarettes normally comprises an inner wrapping formed by folding a sheet of foil packing material about a group of cigarettes; and an outer package formed by folding a sheet of paper or cardboard packing material (depending on whether the packet is a so-called soft or rigid packet) about the inner wrapping.

Since tobacco is rich in volatile aromatic substances and highly hygroscopic, it is advantageous that the inner wrapping be sealed to preserve the organoleptic properties of the tobacco, at least until the packet is unsealed, regardless of the temperature and humidity conditions to which the packet is exposed.

For this purpose, as opposed to a sheet of foil wrapping material, it has been proposed to use a sheet of waterproof heat-seal material, which is folded about the group of cigarettes, and the closing portions then sealed to form a sealed wrapping. The sealing operation is normally performed using heated sealing members, which are brought into contact with the closing portions and pressed against the group with sufficient pressure and long enough to melt the flaps of material defining each closing portion and so seal the closing portion.

Though effective and widely used, the above sealing method has serious drawbacks, in that, by compressing the closing portion flaps between the group and the heated sealing members, heat is inevitably transmitted to the group, thus heating the cigarettes, and the group is crushed, thus possibly damaging the cigarettes.

To eliminate the latter drawback, it has been proposed to insert between the group and the sealed wrapping a stiffening collar of cardboard, which partly or fully encloses the group to prevent the group from losing its shape.

The above solution, however, is economically disadvantageous, by employing extra material, and involves major mechanical complications of the packing machines used to produce wrappings of this sort.

It is an object of the present invention to provide a method of producing a sealed wrapping about a group of cigarettes, designed to provide a straightforward, low-cost solution to the above problems.

According to the present invention, there is provided a method of producing a sealed wrapping about a group of cigarettes, as claimed in the accompanying Claims.

A number of non-limiting embodiments of the present invention will be described by way of example with reference to the accompanying drawings, in which:
Figures 1 to 5 show, schematically, successive folding steps to produce a sealed wrapping using the method according to the present invention;
Figure 6 shows a view in perspective of a sealed wrapping produced using the method according to the present invention;
Figure 7 shows a partial, schematic view of a sealing device which may be used in the Figure 2 and 4 folding steps;
Figure 8 shows an alternative embodiment of the Figure 1 folding step;
Figure 9 shows a detail of a variation of the sealed wrapping in Figure 6;
Figure 10 shows, schematically, a folding step to produce the sealed wrapping in Figure 11; and
Figure 11 shows a variation of the sealed wrapping in Figure 6.

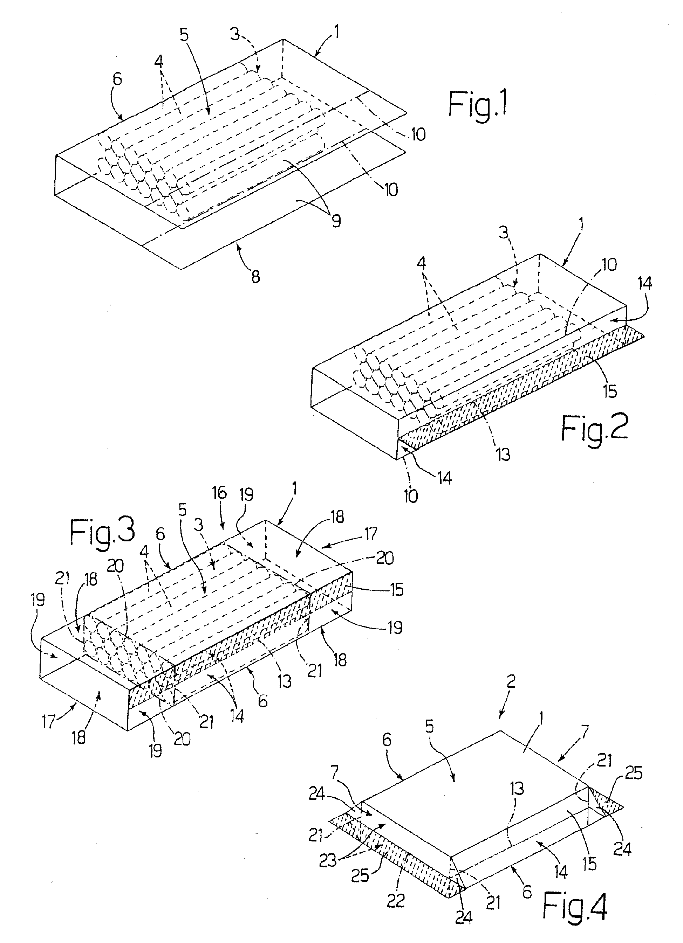

As shown in Figures 1 to 6, the method according to the present invention comprises a sequence of operating steps by which to form a sealed wrapping 2 about a group 3 of cigarettes 4 from a substantially rectangular sheet 1 of waterproof, heat-seal packing material (e.g. a laminated or non-laminated sheet of polypropylene or similar).

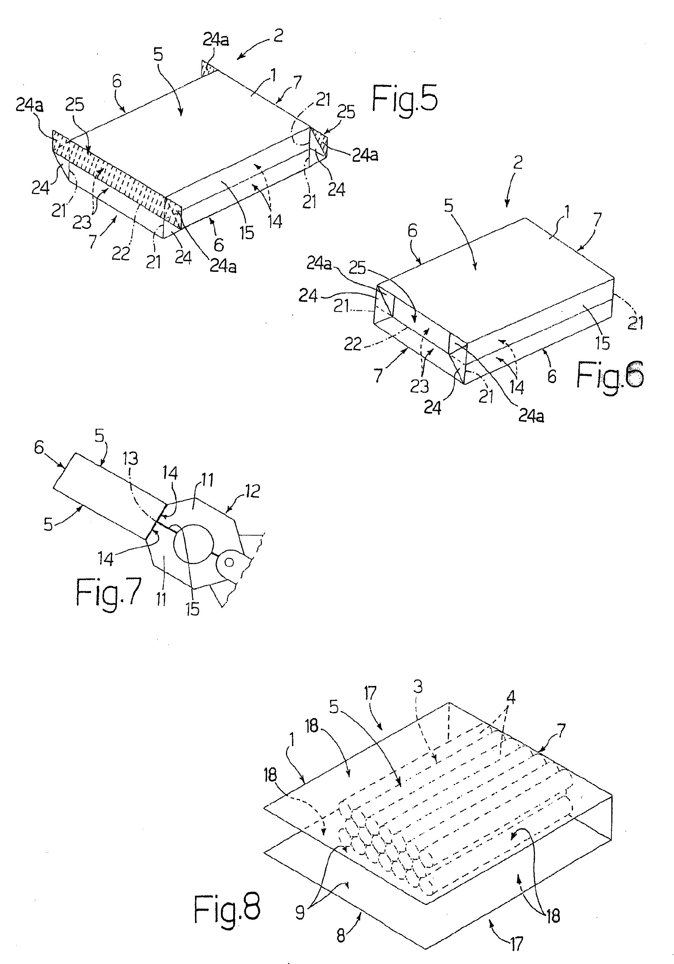

With reference to Figure 6, sealed wrapping 2 is substantially parallelepiped-shaped, and comprises two opposite, parallel major lateral walls 5; two minor lateral walls 6 interposed between and perpendicular to major lateral walls 5; and two parallel end walls 7 perpendicular to major lateral walls 5 and minor lateral walls 6, and defining the ends of sealed wrapping 2.

As shown in Figure 1, at the first operating step to produce sealed wrapping 2, sheet 1 is folded into a U about group 3 and crosswise to cigarettes 4, so that a central portion of the sheet defines one of minor lateral walls 6 and both major lateral walls 5, and an edge portion of the sheet projects, outwards of group 3, from minor lateral wall 6 and major lateral walls 5.

More specifically (Figure 1), an end portion 8 of sheet 1 projects laterally from group 3, and is defined by two substantially rectangular flaps 9, each of which is connected to a relative major lateral wall 5 along a respective fold line 10 (indicated by the dot-and-dash line in Figure 1) parallel to cigarettes 4, and extends outwards of group 3 from fold line 10 and parallel to the other flap 9.

At the second operating step, each flap 9 is engaged by a respective jaw 11 of a gripper-type sealing device 12 (shown schematically in Figure 7), and is moved, parallel to itself and by relative jaw 11, towards the other flap 9.

In the course of the above operation, as each jaw 11 moves gradually towards the other jaw 11, flap 9 is folded along relative fold line 10, and along a further fold line 13 (Figure 7) parallel to fold line 10 and at a distance from fold line 10 equal to roughly half the thickness of group 3.

Closure of jaws 11 (Figure 7) therefore produces two half-walls 14, each of which is defined by the portion of respective flap 9 extending between fold lines 10 and 13, is square with respect to relative major lateral wall 5, and forms, with the other half-wall 14, minor lateral wall 6 when jaws 11 are fully closed.

As shown in Figures 2 and 7, the portions of flaps 9 extending between respective fold lines 13 and the respective free edges are gripped between jaws 11 with a given pressure and at least long enough to seal flaps 9 to each other and so form a tab 15, which is square with respect to minor lateral wall 6 and defines a sealed closing portion of minor lateral wall 6.

At a further step shown in Figure 3, and after jaws 11 are opened and gripper-type sealing device 12 is withdrawn, tab 15 is engaged by a known folding device (not shown) and folded along folding line 13 onto group 3 and one of half-walls 14. (In the example shown, tab 15 is folded upwards. It is important to point out, however, that, as far as implementing the method is concerned, and leaving aside the technical requirements involved in doing so, tab 15 may be folded indifferently upwards or downwards).

By the end of the above step, sheet 1 defines about group 3 a tubular, substantially rectangular-section wrapping 16 having two end portions 17 projecting from respective ends of group 3, and each of which comprises a pair of facing parallel flaps 18, and a pair of facing parallel flaps 19 interposed between flaps 18. More specifically, as shown in Figure 3, each flap 18 extends outwards of group 3 from a relative major lateral wall 5, and is connected to major lateral wall 5 along a respective fold line 20 crosswise to cigarettes 4 (and indicated by a dot-and-dash line in Figure 3); and each flap 19 extends outwards of group 3 from a relative minor lateral wall 6, and is connected to minor lateral wall 6 along a respective fold line 21 crosswise to cigarettes 4 and to fold lines 20 (and indicated by a dot-and-dash line in Figure 3).

At this point, as in the Figure 2 operating step relative to flaps 9, flaps 18 in each pair are engaged by the jaws of a relative gripper-type sealing device (similar to the one shown schematically in Figure 7), and are moved, parallel to themselves, towards each other and sealed between the jaws.

In the course of the above sealing step, each flap 18 is folded along respective fold line 20 and along a respective fold line 22 parallel to fold line 20, and each flap 19 is folded along respective fold line 21, thus forming, for each end portion 17, two half-walls 23, each of which is defined by the portion of respective flap 18 extending between fold lines 20 and 22, and defines, with the other half-wall 23, a respective end wall 7; and two triangular tabs 24, each of which extends outwards of end wall 7 from a respective fold line 21 and is at a right-angle to that minor lateral wall 6 connected to end wall 7 along fold line 21.

As shown in Figure 4, the above operating step also produces, for each end portion 17, a tab 25, which extends from fold line 22, at a right-angle to relative end wall 7 and to relative tabs 24, and defines a sealed closing portion of end wall 7.

At this point, as shown in Figure 5, tabs 25 are folded, by known folding devices not shown, upwards onto group 3 and onto respective half-walls 23. As stated in connection with tab 15, each tab 25 may also be folded upwards or downwards onto either one of relative half-walls 23.

In connection with the above, it should be pointed out that the size of sheet 1 varies according to the size of group 3 to be wrapped in sheet 1.

More specifically, in the examples shown, the size of sheet 1 is such that both the width of flaps 9, measured crosswise to cigarettes 4, and the width of flaps 18 and 19, measured parallel to cigarettes 4, equal the thickness of group 3. Tab 15 and tabs 25 are therefore each of a width equal to half the thickness of group 3, so that tab 15, when folded onto half-wall 14, does not project transversely from half-wall 14, and tabs 25, when folded onto respective half-walls 23, do not project transversely from respective half-walls 23.

In variations not shown, the size of sheet 1 may be proportioned otherwise than in the examples shown, i.e. may be such that the width of tab 15 and/or of tabs 25 is less than half the thickness of group 3, providing it ensures effective sealed closing portions of the respective walls when the tabs are compressed between the jaws of the relative sealing devices.

With reference to Figure 5, folding tabs 25 onto respective half-walls 23 defines, for each end wall 7, two trapezoidal portions, each of which is connected to end wall 7 along fold line 21, and is defined by a respective triangular tab 24, and by a triangular portion 24a of tab 25 projecting from triangular tab 24.

As shown in Figure 6, sealed wrapping 2 is completed by folding the trapezoidal portions adjacent to each end wall 7 onto group 3, i.e. by rotating each trapezoidal portion 180° onto relative end wall 7.

In a further variation shown in Figure 8, at the first operating step in the method, sheet 1 is folded about group 3 longitudinally with respect to cigarettes 4, as opposed to transversely as in Figure 1. From this point on, to obtain a sealed wrapping 2 as shown in Figure 6, sheet 1 is folded and sealed about group 3 in exactly the same way as described above in connection with Figures 2 and 5, regardless of the orientation of group 3 inside sheet 1. In which case, flaps 9, when gripped between jaws 11, therefore define an end wall 7, and each pair of flaps 18 defines a respective minor lateral wall 6.

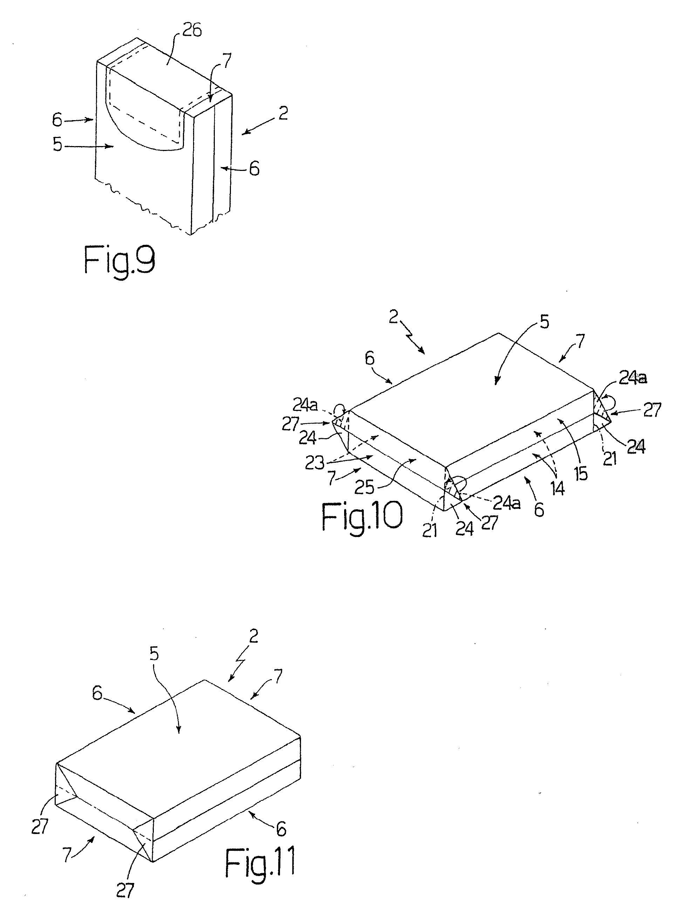

In a further variation shown in Figure 9, sealed wrapping 2 has a closable opening by which to extract the cigarettes. In this case, sheet 1, which is folded longitudinally with respect to cigarettes 4, as in the Figure 8 example, comprises a known adhesive tongue 26, which, when sealed wrapping 2 is completed, straddles the non-sealed end wall 7.

The variation of sealed wrapping 2 in Figure 11 is similar to the Figure 6 embodiment, except that, in this case, the trapezoidal portions folded onto relative end walls 7 are replaced by respective triangular portions 27.

As shown schematically in Figure 10, in this case, the method comprises a further folding step, after the folding step shown in Figure 5, which comprises folding each triangular portion 24a onto respective triangular tab 24 to form a respective triangular portion 27, which is then folded onto end wall 7 (Figure 11).

Triangular portion 24a may be folded indifferently on either side of relative triangular tab 24, but is preferably folded inwards (in the direction of the arrow in Figure 10), i.e. onto relative tab 25, so as to be secured in the folded position by triangular portion 27, when triangular portion 27 is folded onto end wall 7.

To conclude, the way in which sheet 1 is folded and sealed about group 3 to form sealed wrapping 2 therefore has no negative effect on group 3. That is, since the flaps defining the sealed closing portion of a respective wall are placed one on top of the other and gripped and sealed between the jaws of the gripper-type sealing device, no pressure at all is applied to group 3, and substantially no heat transmitted to cigarettes 4. Moreover, being compressed between the jaws of the gripper-type sealing device, instead of against the group, the flaps can be subjected to greater pressure than that required simply to melt the material, thus ensuring a safer, stronger seal.

It should also be pointed out that the method according to the present invention also has the advantage of enabling the use of sealing devices operating differently from commonly used types, such as ultrasound devices, which are particularly advantageous in terms of sealing quality.

Finally, it should also be pointed out that, though sealed wrapping 2 described above is formed about a group of cigarettes, and normally defines the inner wrapping of a "soft" or "rigid" packet of cigarettes, the method according to the present invention may obviously also be used to produce a sealed outer wrapping about a packet of cigarettes or a carton of cigarettes, with no danger of crushing and/or heating the product.

In this connection, it should be pointed out that, when sealed wrapping 2 constitutes the finished outer wrapping of the packet or carton, the method according to the present invention has the further advantage that lateral wall 5, 6 of the resulting sealed wrapping 2, having no fold portions (Figures 6 and 11), may be printed on and advantageously used as a support for advertising messages or similar (not shown).

Finally, in a variation not shown, all the types of sealed wrappings 2 described above may comprise a known tear-off strip to facilitate opening of sealed wrapping 2.

## Claims

1. A method of producing a sealed wrapping (2) for cigarettes, the method comprising the steps of:
folding a sheet (1) of waterproof, heat-seal material into a U about a group (3) of cigarettes (4), so as to form a first minor wall (6; 7) and two major walls (5) of the sealed wrapping (2), and so that the sheet (1) so folded comprises a pair of facing, parallel, projecting first flaps (9) opposite said first minor wall (7; 6) with respect to the group (3);
gripping together the first flaps (9) by means of gripping means (12);
connecting the first flaps (9) to each other to form a second minor wall (6; 7) of the sealed wrapping (2), and a first tab (15; 25) projecting substantially transversely from said second minor wall (6; 7) and defining a sealed closing portion of the second minor wall (6; 7);
folding the first tab (15; 25) onto the relative second minor wall (6; 7) to define, about the group (3), a tubular wrapping (16) having respective projecting portions (17), each of which comprises a pair of second flaps (18);
connecting the second flaps (18) in each pair of second flaps (18) to each other to form a relative third minor wall (7; 6) of the sealed wrapping (2), a respective second tab (25; 15) projecting substantially transversely from said third minor wall (7; 6) and a respective pair of triangular tabs (24);
folding each second tab (25; 15) onto the relative third minor wall (7; 6) and the relative triangular tabs (24), two of said minor walls (6, 7) being axial end walls (7) of the sealed wrapping (2); and
folding each pair of triangular tabs (24) onto the respective adjacent axial end wall (7).

2. A method as claimed in Claim 1, wherein, once folded onto the relative third minor wall (7; 6) and the relative pair of triangular tabs (24), each second tab (25; 15) defines a pair of triangular portions (24a), each projecting from a respective triangular tab (24); and wherein the step of folding the relative pair of triangular tabs (24) onto the respective adjacent axial end wall (7) is performed after folding each triangular portion (24a) onto the respective triangular tab (24).

3. A method as claimed in Claim 1 or 2, wherein the gripping means (12) comprise two heat-seal jaws (11); and the step of gripping together the flaps (9; 18) in each pair is performed by engaging each flap (9; 18) by means of a respective jaw (11), and closing the jaws (11) to move each flap (9; 18) parallel to itself and towards the other flap (9; 18).

4. A method as claimed in Claim 3, wherein the step of connecting the flaps (9; 18) in each pair to each other comprises heat-sealing the flaps (9; 18), and is performed by pressing the flaps (9; 18) together between the jaws (11) for a given time and with a given pressure.

5. A method as claimed in any one of the foregoing Claims, wherein the sealed wrapping (16) is substantially parallelepiped-shaped and comprises a lateral wall bounded by the two major walls (5) and two lateral minor walls (6) of said minor walls and closed at the axial ends by the two axial end walls (7).

6. A method as claimed in Claim 5, wherein the sheet (1) is folded into a U about the group (3) crosswise with respect to the cigarettes (4) to form the two major walls (5) and one of the lateral minor wall (6); the sheet (1) is closed about the group (3) gripping the pair of said first flaps (9) to form the other lateral minor wall (6) and define the tubular wrapping (16) about the group (3); and the tubular wrapping (16) has respective end portions (17) projecting from the opposite axial ends of the group (3), and each of which comprises a pair of said second flaps (18).

7. A method as claimed in Claim 6, wherein the second flaps (18) in each pair of second flaps (18) are connected to each other to form a relative axial end wall (7) of the sealed wrapping (2); a relative tab (25) projecting transversely from the axial end wall (7); and a pair of triangular tabs (24), each of which is connected to the axial end wall (7) along a connecting line (21) between the axial end wall (7) and a relative lateral minor wall (6).

8. A method as claimed in Claim 7, wherein each pair of triangular tabs (24) are folded along said connecting line (21) onto the respective adjacent axial end wall (7), after first folding each tab (25) onto the respective axial end wall (7) and the respective triangular tabs (24).

9. A method as claimed in Claim 8, wherein, once folded onto the relative axial end wall (7) and the relative pair of triangular tabs (24), each tab (25) defines a pair of triangular portions (24a), each projecting from a respective triangular tab (24); and wherein the step of folding the relative pair of triangular tabs (24) onto the respective adjacent axial end wall (7) is performed after folding each triangular portion (24a) onto the respective triangular tab (24).

10. A method as claimed in Claim 5, wherein the sheet (1) is folded into a U about the group (3) longitudinally with respect to the cigarettes (4) to form the two major lateral walls (5) and one of the axial end wall (7); the sheet (1) is closed about the group (3) gripping the pair of said first flaps (9) to form the other axial end wall (7) and define the tubular wrapping (16) about the group (3); and the tubular wrapping (16) has respective end portions (17) projecting from the opposite axial ends of the group (3), and each of which comprises a pair of said second flaps (18).

11. A method as claimed in Claim 10, wherein the second flaps (18) in each pair of second flaps (18) are connected to each other to form a relative lateral minor wall (6) of the sealed wrapping (2); a relative tab (15) projecting transversely from the lateral minor wall (6); and a pair of triangular tabs (24), each of which is connected to the lateral minor wall (6) along a connecting line (21) between the lateral minor wall (6) and a relative axial end wall (7).

12. A method as claimed in Claim 11, wherein each pair of triangular tabs (24) are folded along said connecting line (21) onto the respective adjacent axial end wall (7), after first folding each tab (15) onto the respective lateral minor wall (6) and the respective triangular tabs (24).

13. A method as claimed in Claim 12, wherein, once folded onto the relative lateral minor wall (6) and the relative pair of triangular tabs (24), each tab (15) defines a pair of triangular portions (24a), each projecting from a respective triangular tab (24); and wherein the step of folding the relative pair of triangular tabs (24) onto the respective adjacent axial end wall (7) is performed after folding each triangular portion (24a) onto the respective triangular tab (24).

14. A method as claimed in any one of the foregoing Claims, wherein the gripping means (12) comprise ultrasound sealing means.

15. A method as claimed in any one of the foregoing Claims, wherein the sealed wrapping (2) constitutes the inner wrapping of a rigid packet of cigarettes.

16. A method as claimed in any one of the foregoing Claims, wherein the sealed wrapping (2) constitutes the inner wrapping of a soft packet of cigarettes.

17. A method as claimed in any one of Claims 1 to 16, wherein the sealed wrapping (2) comprises a closable opening located at one axial end wall (7) and by which to extract the cigarettes (4); and the sheet (1) comprises an adhesive tongue (26) which can be opened and closed to open and close the closable opening by which to extract the cigarettes (4).

18. A method as claimed in any one of Claims 1 to 5, wherein said step of folding a sheet (1) of waterproof, heat-seal material into a U about a group (3) of cigarettes (4) is performed by folding the sheet perpendicularly to the longitudinal axes of the cigarettes (4).

19. A method as claimed in any one of Claims 1 to 5, wherein said step of folding a sheet (1) of waterproof, heat-seal material into a U about a group (3) of cigarettes (4) is performed by folding the sheet parallel to the longitudinal axes of the cigarettes (4).

20. A method as claimed in Claim 5, wherein the lateral wall is printed.

21. A method of any one of the foregoing Claims, wherein the sealed wrapping (2) comprises a tear tape.
